# EUROPÄISCHE PATENTSCHRIFT

(11) **EP 1 526 945 B1**
(45) Veröffentlichungstag und Bekanntmachung des Hinweises auf die Patenterteilung: **09.06.2010**
(21) Anmeldenummer: 03784155.8
(22) Anmeldetag: 02.08.2003
(51) Int. Cl.: B23P 9/02, F16C 3/08, B24B 39/04, B24B 5/42, B23B 5/18

(54) **VERFAHREN ZUM FERTIGBEARBEITEN VON KURBELWELLEN FÜR KRAFTFAHRZEUGMOTOREN**
METHOD FOR FINISHING CRANKSHAFTS FOR MOTOR VEHICLE ENGINES
PROCEDE DE FINITION DE VILEBREQUINS DESTINES A DES MOTEURS DE VEHICULES

(30) Priorität: 06.08.2002 DE 10235957
(43) Veröffentlichungstag der Anmeldung: 04.05.2005
(73) Patentinhaber: Hegenscheidt-MFD GmbH & Co. KG, 41812 Erkelenz (DE)
(72) Erfinder: HEIMANN, Alfred, 52078 Aachen (DE); KLOMP, Reinhard, 41238 Mönchengladbach (DE); REIM, Peter, 38162 Cremlingen (DE)
(74) Vertreter: Cohausz & Florack
(86) Internationale Anmeldenummer: PCT/EP2003/008575
(87) Internationale Veröffentlichungsnummer: WO 2004/014600

(56) Entgegenhaltungen:
- EP-A- 1 052 049
- EP-A- 1 211 026
- DE-A- 3 939 935
- DE-A- 19 833 363
- DE-A- 19 919 893
- US-A- 5 009 001
- US-A- 5 408 745
- PATENT ABSTRACTS OF JAPAN vol. 012, no. 292 (M-729), 10. August 1988 (1988-08-10) -& JP 63 068325 A (KOMATSU LTD), 28. März 1988 (1988-03-28)

## Beschreibung

Die Erfindung betrifft ein Verfahren zum Fertigbearbeiten der Lagerstellen an Haupt- und Pleuellagerzapfen von Kurbelwellen für Kraftfahrzeugmotoren, wobei die Kurbelwellen als tangierende Radien bezeichnete Abrundungen zwischen den Lagerstellen und den jeweils an die Lagerstellen angrenzenden Übergängen, wie zum Beispiel Wangen oder Passlagern, aufweisen. Ein solches Verfahren ist aus der US 5,009,001 bekannt. Die Erfindung betrifft ebenfalls eine Kurbelwelle mit Haupt- und Pleuellagerzapfen.

Zur Erhöhung der Dauerfestigkeit der Kurbelwelle von Motoren für Kraftfahrzeuge werden die Übergänge an den Lagerstellen der Haupt- und Pleuellagerzapfen festgewalzt. Dabei werden Festwalzrollen, die einen Durchmesser von etwa 15 mm und einen Abrundungsradius von etwa 1,3 mm aufweisen, mit definierter Kraft in die Radien oder Einstiche gedrückt, welche die jeweilige Lagerstelle des Haupt- oder Pleuellagerzapfens zu beiden Seiten begrenzen. Durch das Eindrücken der harten Festwalzrollen entsteht eine plastische Verformung zwischen dem Übergang, beispielsweise der Wange oder des Passlagers der Kurbelwelle, und der Lagerstelle und bringt auf diese Weise einen Zustand von Druckeigenspannungen in die Kurbelwelle ein, welcher die Dauerfestigkeit der Kurbelwelle erhöht. Dabei wird für das Festwalzen ein Teil der Breite der Lagerstelle benötigt. Von einer theoretisch maximal verfügbaren Breite zwischen zwei benachbarten Übergängen und der zugehörigen Lagerstelle eines Haupt- oder Pleuellagerzapfens steht demnach nur eine verringerte Breite als Auflage für das Pleuel oder das Hauptlager zur Verfügung. Durch die höhere Ausnutzung von Motoren, insbesondere von Dieselmotoren, entsteht der Wunsch, eine möglichst große Breite der Lagerstelle am Haupt- oder Pleuellagerzapfen ausnutzen zu können. Zwar wächst die nutzbare Lagerbreite mit sinkendem Abrundungsradius der Festwalzrolle, aber zugleich sinkt auch die dabei mit dem Festwalzen erzielbare Dauerfestigkeit der Kurbelwelle.

Insbesondere erhöhen Einstiche oder Hohlkehlen das Spannungsniveau an Kurbelwellen bei Biege- und Torsionsbeanspruchung, weil sie zugleich den Durchmesser am Übergang zur Wange schwächen. Das gilt gleichermaßen für Haupt- und Hublager, so dass sich in Folge der Einstiche die Beanspruchung am Übergang zur Wange weiter erhöht.

Aus der DE 198 33 363 A1 ist ein "Verfahren zur Drehbearbeitung von Rotationsflächen an Werkstücken, vorzugsweise an Kurbelwellen, und ein scheibenförmiges Werkzeug zur Durchführung des Verfahrens" bekannt. Für die Drehbearbeitung von Kurbelwellen ist ein scheibenförmiges Werkzeug vorgesehen, das aus einem Zentrierkörper, einem Tragkörper und mehreren Werkzeugeinheiten zum Schlichten der Freistiche an den Haupt- und Pleuellagerzapfen sowie weiteren Werkzeugeinheiten zum Schlichten der eigentlichen Lagerstellen an den Haupt- und Pleuellagerzapfen besteht, welche sich zwischen den Freistichen befinden. Dabei werden die Freistiche mit mehreren Werkzeugeinheiten, die je einen Schlicht-Schneideinsatz enthalten, geschlichtet. Gegenüber der Vorbearbeitung der Lagerstellen durch Schruppen erfolgt hier bekanntermaßen die Feinbearbeitung der Einstiche und Lagerstellen durch Schlichten. Somit wird eine gute Oberflächengüte und geringe Rauhtiefe an den Bearbeitungsstellen erzielt, wodurch die Dauerfestigkeit der Kurbelwelle erhöht wird.

Weiterhin ist aus der europäischen Patentanmeldung EP 1 052 049 A2 ein Verfahren, Werkzeug und Einrichtung zur spanabhebenden Bearbeitung von Kurbelwellen bekannt geworden. Demnach kann es fertigungstechnisch günstig sein, wenn bei einer Herstellung von Kurbelwellen die Lagerzonen jeweils im ersten Bearbeitungsschritt gefräst werden, wonach im zweiten Bearbeitungsschritt jeweils die Drehbewegung des Werkzeuges in einer vorgesehenen Position beendet und in dieser die beiderseits der Lagerfläche angeordneten Rundungen oder Hohlkehlen der Lagerzapfen drehbearbeitet werden. Somit werden anwendungstechnisch erforderliche Kanten von dynamisch hoch beanspruchten Teilen gerundet oder mit Hohlkehlen ausgeführt, die schließlich zu einer Erhöhung der Dauerfestigkeit der Kurbelwelle führen.

Aus der DE 39 39 935 ist ein Verfahren zur Herstellung einer Kurbelwelle bekannt. Nach dem Schmieden und anschließenden Vergüten wird ein Kurbelzapfen einer spanabhebenden Bearbeitung mit Schleifzugabe auf einer Lauffläche unterzogen. Die Übergänge vom Kurbelzapfen zu den seitlichen Anlaufflächen der Kurbelwangen weisen radiale Eindrehungen auf. Mit einem Werkzeug mit definierter Schneide werden die Lauffläche und die seitlichen Anlaufflächen der Kurbelwangen gleichzeitig bearbeitet. Der Radius für die Eindrehungen wird sehr klein gewählt. Die Eindrehungen und die Anlaufflächen werden spanabhebend auf Fertigmaß gebracht. Es folgteine Oberflächenhärtung und anschließend das Schleifen der Lauffläche auf Endmaß.

Aus der US 5,009,001 ist ein Verfahren zur Erhöhung der Dauerfestigkeit von Kurbelwellen bekannt. Die als "tangierende Radien" ausgebildeten Übergänge zwischen einem Kurbelzapfen und den angrenzenden Wangen werden zunächst bis auf eine Rauhtiefe zwischen 6 µm und 25 µm feinbearbeitet. Daraufhin erfolgt das Härten der feinbearbeiteten Übergänge bis zu einer Tiefe zwischen 2 mm und 3 mm.

Die Aufgabe der vorliegenden Erfindung besteht darin, Lagerstellen von möglichst großer Breite an einer Kurbelwelle zu erzielen und dabei zugleich deren Dauerfestigkeit deutlich zu erhöhen.

Die Lösung dieser Aufgabe wird durch Feinbearbeitung der Kurbelwelle erzielt. Dabei kann es sich im günstigsten Falle um eine Kurbelwelle handeln, welche bei ihrer Vorbearbeitung, beispielsweise durch Gießen, Schmieden und anschließendem Härten bereits geringe Fertigungstoleranzen aufweist.

Erfindungsgemäß können aber auch Kurbelwellen fertig bearbeitet werden, die bereits einer spanabhebenden Bearbeitung, beispielsweise durch Fräsen, unterworfen wurden und anschließend eine Feinbearbeitung erfahren sollen. Dabei können solche Kurbelwellen nach dem Schruppen auch noch gehärtet worden sein.

Zur Lösung der Aufgabe wird vorgesehen, dass man die tangierenden Radien zwischen den Lagerstellen und den jeweils an die Lagerstellen angrenzenden Übergängen, wie zum Beispiel den Wangen oder Passlagern, mit einem Festwalzwerkzeug festwalzt und anschließend, unter Einhaltung eines Abstands zum jeweiligen Übergang, die betreffende Lagerstelle mit geringer, zwischen 0,1 mm und 0,5 mm liegenden Spantiefe spanabhebend bearbeitet.

Eine erfindungsgemäße Kurbelwelle wird im Anspruch 8 beansprucht.

Auf diese Weise wird nur wenig von dem durch Festwalzen verursachten günstigen Druckeigenspannungsverlauf in der Hohlkehle entfernt, so dass der Druckeigenspannungszustand der Kurbelwelle weitgehend erhalten bleibt. Auch können auf diese Weise breitere Lagerstellen erzeugt werden, als das bisher üblich war. Das wird möglich, in dem die Schleifscheibe oder das Werkzeug, mit welchen die Lagerstelle feinbearbeitet wird, den Radius im Übergang zwischen der Lagerstelle und der angrenzenden Wange nicht berührt sondern lediglich am Rand der durch das Festwalzen aufgeworfenen Einwalzzone Material weggenommen wird. In folge dessen kann der Materialabtrag bei der Fertigbearbeitung der Lagerstellen gering gehalten werden und beträgt nur noch zwischen 0,1 bis 0,3 mm. Das Verfahren eignet sich somit besonders für das Feinbearbeiten von auf der Lauffläche der Lager gehärteten Kurbelwellen, wobei die Eindringtiefe der Härtung aufgrund des kleinen Materialabtrags gering sein kann.

Die Einwalztiefe der tangierenden Radien ergibt sich aus der benötigten Dauerfestigkeitssteigerung. Sie beträgt meist um 0,2 mm. Im Vergleich zu festgewalzten Einstichen kann die Einwalztiefe der tangierenden Radien geringer sein.

Die so erhaltene Kurbelwelle zeichnet sich durch festgewalzte tangierende Radien zwischen den jeweiligen Lagerstellen und deren Übergängen aus.

Das spanabhebende Fertigbearbeiten der Lagerstelle kann entweder mit unbestimmter Schneide, beispielsweise durch Schleifen, oder mit bestimmter Schneide, beispielsweise durch Fräsen, Drehen, Räumen, Drehräumen oder Dreh-Drehräumen erfolgen.

Schließlich wird der beidseitige Abstand zwischen den Übergängen und der jeweiligen Lagerstelle durch die Breite des Feinbearbeitungswerkzeugs bestimmt. Er beträgt zwischen 0,5 und 5 mm, vorzugsweise 1 mm.

Nachfolgend wird die Erfindung an einem Ausführungsbeispiel näher beschrieben.

Es zeigen die
- Fig. 1 einen Abschnitt einer Kurbelwelle in verkleinertem Maßstab,
- Fig. 2 einen Ausschnitt aus einem Lagerzapfen einer Kurbelwelle nach Fig. 1,
- Fig. 3 einen vergrößerten Ausschnitt A aus einem Übergangsbereich einer Kurbelwelle und
- Fig. 4 einen vergrößerten Ausschnitt aus dem Übergangsbereich der Fig. 3 einer Kurbelwelle.

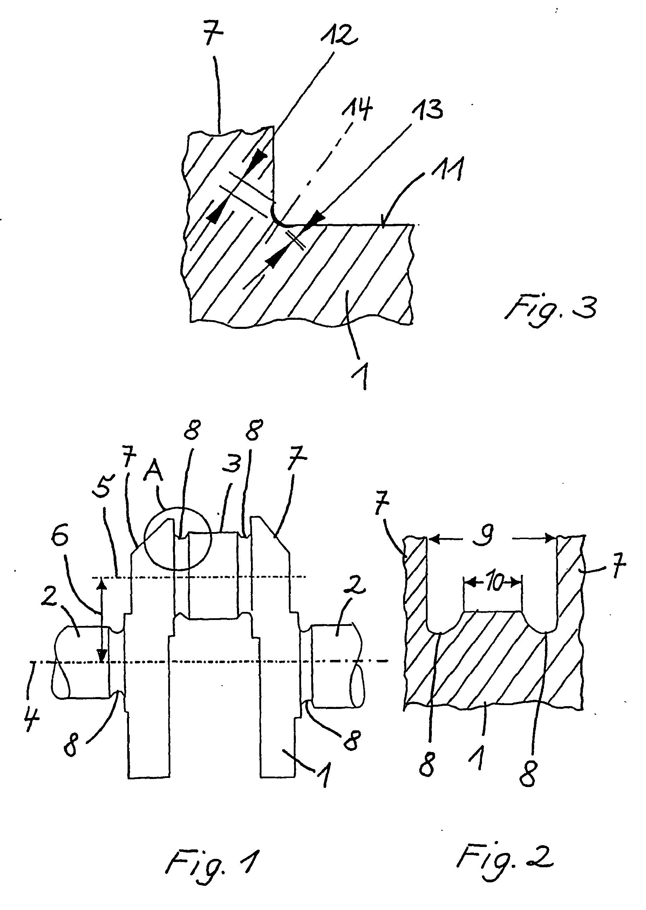

Die Kurbelwelle 1 hat zwei Hauptlagerzapfen 2 und einen Hublagerzapfen 3. Die Kurbelwelle 1 ist im Motorblock (nicht gezeigt) eines Kraftfahrzeugmotors mit den beiden Hauptlagerzapfen 2 um die Drehachse 4 drehbar gelagert. Die Drehachse 5 des Hublagerzapfens 3 ist von der Drehachse 4 der Kurbelwelle 1 um den Abstand 6 entfernt, welcher dem Hub entspricht. Die Übergänge zwischen den beiden Hauptlagerzapfen 2 und dem Hublagerzapfen 3 bilden die beiden Wangen 7. Zwischen den Hauptlager- 2, dem Hublagerzapfen 3 und den jeweiligen Übergängen 7 sind jeweils Hohlkehlen 8 vorgesehen. Die theoretisch verfügbare größte Lagerbreite 9 wird durch die beiden Hohlkehlen 8 auf die tatsächlich verfügbare Lagerbreite 10 reduziert, wie man das in der Fig. 2 erkennen kann.

Erfindungsgemäß wird nun die Lagerstelle 11, welche einem Haupt- 2 oder einem Hublagerzapfen 3 zugehört, mit Hilfe einer Festwalzrolle (nicht gezeigt) festgewalzt. Der Abrundungsradius 12 der Festwalzrolle soll etwa 1,2 mm betragen. Es wird bis zu einer Einwalztiefe 13 von etwa 0,2 mm festgewalzt. Vor dem Festwalzen kann die Lagerstelle 11 spanabhebend, sei es durch Fräsen, Drehen oder Räumen vorbearbeitet und anschließend auch gehärtet worden sein.

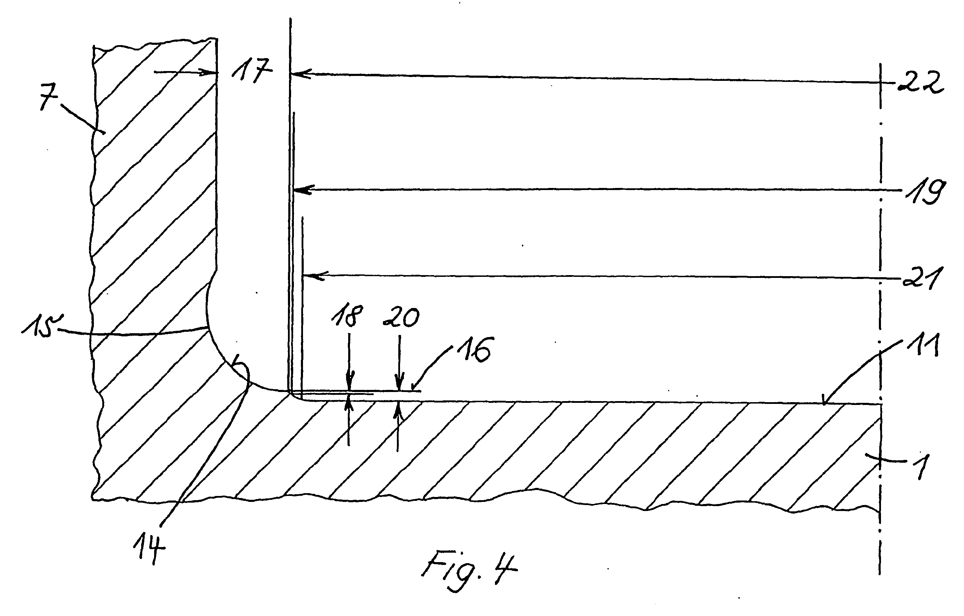

Die Fig. 4 zeigt die halbe Breite einer Lagerstelle 11. Die Lagerstelle 11 wird im Übergangsbereich 14 zu beiden Seiten der Lagerstelle 11 festgewalzt. Sogenannte "tangierende Radien" 15 bilden die Übergänge zischen der Lagerstelle 11 und den Wangen 7. Anschließend wird die Oberfläche 16 der Lagerstelle 11 durch Schleifen mit einer Schleifscheibe (nicht gezeigt) fertig bearbeitet. Dabei hält die Schleifscheibe zu den beiden Übergängen 7 einen Abstand 17 ein. Beispielsweise wird beim Abtragen der Oberfläche 16 mit Hilfe der Schleifscheibe in einer Tiefe 18 von 0,1 mm eine Lagerbreite 19 der Lagerstelle 11 erhalten. Beim Abtragen in einer Tiefe 20 von 0,3 mm wird hingegen nur noch eine nutzbare Lagerbreite 21 erhalten, welche geringer ist als die nutzbare Lagerbreite 19, die bei einem Schleifabtrag von geringerer Tiefe 18 erhalten wurde. Hierbei wurde stillschweigend vorausgesetzt, dass die Schleifscheibe mit welcher die Lagerstelle 11 bearbeitet wurde, an ihren Kanten jeweils einen gleichgroßen Abrundungsradius in der Größenordnung von 0,5 mm aufweist.

Eine theoretisch maximal erreichbare Breite 22 der Lagerstelle 11 kann allerdings nicht erzielt werden, solange vorgesehen ist, dass bei der Fertigbearbeitung des Haupt- 2 oder Hublagerzapfens 3 jeweils noch ein Abtrag 18 oder 20 der Lagerstelle 11 erfolgen soll. Anstelle einer Bearbeitung mit einer Schleifscheibe kann die Lagerstelle 11 aber auch mit einem Fräser oder einem Räumwerkzeug bei geringer Spantiefe bearbeitet werden.

Im Vergleich zur herkömmlichen, an sich bekannten Bearbeitung der Lagerzapfen 2 oder 3 von Kurbelwellen 1, wie sie in der Fig. 2 dargestellt ist, werden durch das vorliegende Verfahren wesentlich größere Lagerbreiten 19 bzw. 21 erreicht, wobei zugleich die Dauerfestigkeit der Kurbelwelle 1 dadurch erhöht wird, dass der wirksame Querschnitt der Haupt- 2 oder Hublagerzapfen 3 durch Hohlkehlen 8 nicht weiter geschwächt wird.

### Bezugszeichenliste

- 1: Kurbelwelle
- 2: Hauptlagerzapfen
- 3: Hublagerzapfen
- 4: Drehachse
- 5: Drehachse
- 6: Hub
- 7: Übergang, Wange
- 8: Hohlkehle
- 9: theoretische Lagerbreite
- 10: praktische Lagerbreite
- 11: Lagerstelle
- 12: Radius Festwalzrolle
- 13: Einwalztiefe
- 14: Übergangsbereich
- 15: tangierender Radius
- 16: Oberfläche der Lagerstelle
- 17: Abstand
- 18: Schleiftiefe
- 19: nutzbare Lagerbreite
- 20: Schleiftiefe
- 21: nutzbare Lagerbreite
- 22: theoretisch nutzbare Lagerbreite

## Patentansprüche

1. Verfahren zum Fertigbearbeiten der Lagerstellen an Haupt- und Pleuellagerzapfen von Kurbelwellen für Kraftfahrzeugmotoren, wobei die Kurbelwellen als tangierende Radien bezeichnete Abrundungen zwischen den Lagerstellen und den jeweils an die Lagerstellen angrenzenden Übergängen, wie z.B. Wangen oder Passlagern, aufweisen, **dadurch gekennzeichnet, dass** man
- die tangierenden Radien (15) mit einem Festwalzwerkzeug festwalzt und anschließend, unter Einhaltung eines Abstands (17) zum jeweiligen Übergang (7), die
- betreffende Lagerstelle (11) mit geringer, zwischen 0,1 mm und 0,5 mm liegenden Spantiefe (18, 20) spanabhebend bearbeitet.

2. Verfahren nach Anspruch 1, **dadurch gekennzeichnet, dass** die Einwalztiefe (13) beim Festwalzen der Abrundungen (14) zwischen 0,1 und 0,5 mm, vorzugsweise 0,2 mm beträgt.

3. Verfahren nach den Ansprüchen 1 und 2, **dadurch gekennzeichnet, dass** die Spantiefe (18, 20) bei der abschließenden spanabhebenden Bearbeitung 0,25 mm beträgt.

4. Verfahren nach Anspruch 3, **dadurch gekennzeichnet, dass** man spanabhebend mit unbestimmter Schneide durch Schleifen arbeitet.

5. Verfahren nach Anspruch 4, **dadurch gekennzeichnet, dass** man mit einer Schleifscheibe arbeitet, die einen Kantenradius bis 1 mm, vorzugsweise 0,5 mm, aufweist.

6. Verfahren nach Anspruch 3, **dadurch gekennzeichnet, dass** man spanabhebend mit bestimmter Schneide durch Fräsen, Drehen, Räumen, Drehräumen oder Dreh-Drehräumen arbeitet.

7. Verfahren nach einem der Ansprüche 1 bis 6, **dadurch gekennzeichnet, dass** der Abstand (17) zwischen der Wange (7) und der jeweiligen Lagerstelle (11) zwischen 0,5 und 5 mm, vorzugsweise 1 mm beträgt.

8. Kurbelwelle (1) mit Haupt- (2) und Pleuellagerzapfen (3), **dadurch gekennzeichnet, dass** deren Lagerstellen (11) nach einem der Ansprüche 1 bis 6 fertigbearbeitet sind.

## Claims

1. Method for finishing the bearing points on crankshaft main bearing and connecting rod bearing trunnions of crankshafts for motor vehicle engines. According to the invention, the crankshafts have tangent radii roundings between the bearing points and the transitions adjacent in each case to the bearing points, such as for example webs or thrust bearings, **characterised in that**
- the tangent radii (15) are deep rolled with a deep rolling tool and then, while maintaining a distance (17) from the respective transition (7), the
- relevant bearing point (11) is machined with a shallow cutting depth (18,20) between 0.1 mm and 0.5 mm with material removal.

2. Method according to claim 1, **characterised in that** the rolling depth (13) during deep rolling of the roundings (14) amounts to between 0.1 and 0.5 mm, preferably 0.2 mm.

3. Method according to claims 1 and 2, **characterised in that** the cutting depth (18,20) during final machining with material removal amounts to 0.25 mm.

4. Method according to claim 3, **characterised in that** machining with material removal is carried out with an unspecified cutting edge by grinding.

5. Method according to claim 4, **characterised in that** machining is carried out with a grinding wheel having an edge radius of up to 1 mm, preferably 0.5 mm.

6. Method according to claim 3, **characterised in that** machining with material removal is carried out with a specific cutting edge by milling, turning, broaching, turn-broaching, or turn-turn-broaching.

7. Method according to one of claims 1 to 6, **characterised in that** the distance (17) between the web (7) and relevant bearing point (11) is between 0.5 and 5 mm, preferably 1 mm.

8. Crankshaft (1) with crankshaft main bearing (2) and connecting rod bearing trunnions (3), **characterised in that** their bearing points (11) are finished-machined according to one of claims 1 to 6.

## Revendications

1. Procédé pour le finissage des point d'appui sur les tourillons de coussinet de bielle et principaux des vilebrequins pour les moteurs de véhicules ; les vilebrequins présentent des arrondis en tant que rayons tangents entre les points d'appui et les transitions correspondantes attenantes aux points d'appui, comme p. ex. parois ou paliers de réglage, **caractérisé en ce que**
- les rayons tangents (15) sont galetés avec un outil de galetage et qu'ensuite en respectant un écart (17) par rapport à la transition correspondante (7), le
- point d'appui concerné (11) est usiné par enlèvement de copeaux avec une profondeur de coupe faible comprise entre 0,1 mm et 0,5 mm (18,20).

2. Procédé selon la revendication 1, **caractérisé en ce que** la profondeur de galetage (13) lors du galetage des arrondis (14) est comprise entre 0,1 et 0,5 mm et s'élève, de préférence, à 0,2 mm.

3. Procédé selon les revendications 1 et 2, **caractérisé en ce que** la profondeur de coupe (18,20) s'élève à 0,25 mm lors de l'usinage final par enlèvement de copeaux.

4. Procédé selon la revendication 3, **caractérisé en ce que** l'usinage s'effectue par enlèvement de copeaux avec un tranchant indéterminé par rectification.

5. Procédé selon la revendication 4, **caractérisé en ce que** l'usinage s'effectue avec une meule qui présente un rayon d'arête s'élevant de préférence à 0,5 mm et pouvant aller jusqu'à 1 mm.

6. Procédé selon la revendication 3, **caractérisé en ce que** l'usinage s'effectue avec un tranchant déterminé par fraisage, tournage, brochage, brochage par tournage ou tournage-brochage par tournage.

7. Procédé selon une des revendications de 1 à 6, **caractérisé en ce que** l'écart (17) entre la paroi (7) et le point d'appui correspondant (11) s'élève entre 0,5 et 5 mm de préférence à 1 mm.

8. Vilebrequin (1) avec tourillons de coussinet de bielle (3) et principaux (2), **caractérisé en ce que** la finition de ses points d'appui (11) est effectuée selon une des revendications de 1 à 6.
